# EUROPEAN PATENT SPECIFICATION

(11) **EP 0 376 876 B1**
(45) Date of publication and mention of the grant of the patent: **27.04.1994**
(21) Application number: 89630234.6
(22) Date of filing: 22.12.1989
(51) Int. Cl.: C08K 5/19, C08L 21/00

(54) **Vulcanizate activator system for rubber compositions**
Aktivatorsystem zum Vulkanisieren von Kautschukmischungen
Système d'activateur de vulcanisation pour compositions de caoutchouc

(30) Priority: 28.12.1988 US 290796
(43) Date of publication of application: 04.07.1990
(73) Proprietor: THE GOODYEAR TIRE & RUBBER COMPANY, Akron, Ohio 44316-0001 (US)
(72) Inventor: Parks, Carl Ramsey, Akron Ohio 44313 (US); D'Sidocky, Richard Michael, Ravenna Ohio 44266 (US); Cohen, Martin Paul, Akron Ohio 44313 (US)
(74) Representative: Leitz, Paul

(56) References cited:
- GB-A- 689 442
- PATENT ABSTRACTS OF JAPAN, vol. 11, no. 317 (C-452)[2764], 15th October 1987; & JP-A-62 104 855
- "Kautschuk + Gummi Kunststoffe", 36, 12/83, R.P.Mathur et. al., pages 1067 - 1070.

## Description

The present invention relates to the vulcanization of a sulfur curable rubber composition. More particularly, the present invention relates to a method for increasing the rate of cure of a sulfur vulcanizable rubber by the addition of a methyl trialkyl ammonium salt.

The "rate of cure" is defined as the rate at which crosslinking and the development of the stiffness (modulus) of a rubber compound occurs. As the rubber compound is heated, the properties of the rubber compound change from a soft plastic to a tough elastic material. During the curing step, crosslinks are introduced, which connect the long polymer chains of the rubber. As more crosslinks are introduced, the polymer chains become more firmly connected and the stiffness or modulus of the compound increases. The rate of cure is an important vulcanization parameter since it in part determines the time the compound must be cured, i.e., the "cure time". In the manufacture of vulcanized rubber articles, significant cost savings can be realized through a reduction of cure time. Through enhanced rates of cure, the cure time required to meet minimum states of cure can be reduced. Given the above, extensive research has been conducted in order to shorten the cure times of rubbers. Therefore, there exists a need for improved methods which enhance the rate of cure in the absence of imparting undesirable properties to the vulcanizate.

The present invention relates to a method for enhancing the rate of vulcanization of a rubber composition comprising adding to a sulfur vulcanizable rubber a methyl trialkyl ammonium salt of the formula: 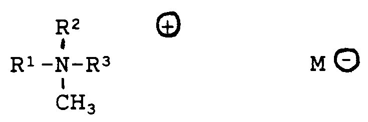
wherein R¹, R², and R³ are independently alkyl radicals having 8 to 10 carbon atoms and M is selected from the group consisting of Cl, Br, CH₃SO₄ and HSO₄. In addition, there is disclosed a sulfur vulcanizable rubber composition comprising an elastomer containing olefinic unsaturation, a sulfur vulcanizing agent, an accelerator and a methyl trialkyl ammonium salt selected from the above formula.

The present invention relates to the use of a methyl trialkyl ammonium salt as an activator for sulfur curable rubber compositions. A particularly preferred methyl trialkyl ammonium salt is methyl trialkyl(C₈-C₁₀) ammonium chloride which is commercially available under the trademark Adogen¼ 464 from Sherex Chemical Company of Dublin, Ohio and from Henkel Corporation, Minneapolis, Minnesota, under the trademark Aliquot¼ 336. Methyl trialkyl ammonium salts are generally known as phase-transfer catalysts and are described in U.S. Patent 3,992,432 which is incorporated by reference in its entirety.

For ease in handling, the methyl trialkyl ammonium salt may be deposited on suitable carriers. Examples of carriers which may be used in the present invention include silica, carbon black, alumina, kieselguhr, silica gel and calcium silicate.

Use of a methyl trialkyl ammonium salt does not appear to affect crosslink distribution when used in combination with primary and optionally secondary accelerators. However, along with increased cure rate, there is usually seen an increased curative efficiency in the form of increased state or degree of cure.

The present invention may be used to cure sulfur vulcanizable rubbers or elastomers containing olefinic unsaturation. The phrase "rubber or elastomer containing olefinic unsaturation" is intended to include both natural rubber and its various raw and reclaim forms as well as various synthetic rubbers. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers.

The activator used in the present invention may be added to the rubber by any conventional technique such as on a mill or in a Banbury. The amount of methyl trialkyl ammonium salt may vary widely depending on the type of rubber and other compounds present in the vulcanizable composition. Generally, the amount of methyl trialkyl ammonium salt is used in a range of from about .05 to about 5.0 phr with a range of .1 to about 1.5 phr being preferred.

Vulcanization of the rubber is generally carried out at temperatures of between about 100°C and 200°C. Preferably, the vulcanization is conducted at temperatures ranging from about 110°C to 180°C. Any of the usual vulcanization processes may be used such as heating in a press or mold, heating with superheated steam or hot air or in a salt bath.

In addition to the methyl trialkyl ammonium salt, other rubber additives may also be incorporated in the sulfur vulcanizable material. The additives commonly used in rubber vulcanizates are, for example, extenders, fillers, pigments, plasticizers, zinc oxide, stearic acid, antioxidants and antiozonants.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur.

Accelerators are used to control the time and/or temperature required for vulcanization and to improve the properties of the vulcanizate. In one embodiment, a single accelerator system may be used, i.e., primary accelerator. In another embodiment, combinations of two or more accelerators may be used which may consist of a primary accelerator which is generally used in the larger amount, and a secondary accelerator which is generally used in smaller amounts in order to activate and to improve the properties of the vulcanizate. Combinations of these accelerators have been known to produce a synergistic effect of the final properties and are somewhat better than those produced by use of either accelerator alone. In addition, delayed action accelerators may be used which are not effected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates.

## Claims

1. A method for increasing the rate of vulcanization of a rubber composition comprising adding to a sulfur vulcanizable rubber a methyl trialkyl ammonium salt of the formula: 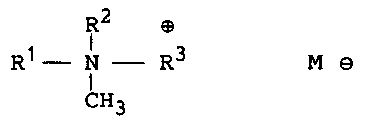 wherein R¹, R², and R³ are independently alkyl radicals having 8 to 10 carbon atoms and M is selected from the group consisting of Cl, Br, CH₃SO₄ and HSO₄.

2. The method of claim 1 wherein at least 0.05 parts by weight per 100 parts by weight of rubber of said methyl trialkyl ammonium salt is added.

3. The method of claim 2 wherein the methyl trialkyl ammonium salt is added in an amount ranging from 0.05 to 5.0 parts by weight per 100 parts by weight of rubber.

4. The method of claim 1 wherein M is Cl or CH₃SO₄.

5. The method of claim 4 wherein M is Cl.

6. The method of claim 4 wherein M is CH₃SO₄.

7. The method of claim 2 wherein said sulfur vulcanizable rubber contains an elastomer containing olefinic unsaturation and is selected from the group consisting of natural rubber, neoprene, polyisoprene, butyl rubber, polybutadiene, styrene-butadiene copolymer, methyl methacrylate-butadiene copolymer, isoprene-styrene copolymer, methyl methacrylate-isoprene copolymer, acrylonitrile-isoprene copolymer, acrylonitrile-butadiene copolymer, EPDM or mixtures thereof.

8. The method of claim 7 wherein said sulfur vulcanizable rubber is selected from the group consisting of natural rubber, SBR, polyisoprene, or mixtures thereof.

9. A sulfur vulcanizable rubber composition comprising an elastomer containing olefinic unsaturation, a vulcanizing agent, an accelerator and a methyl trialkyl ammonium salt of the formula: 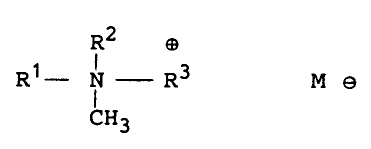 wherein R¹, R², and R³ are independently alkyl radicals having 8 to 10 carbon atoms and M is selected from the group consisting of Cl, Br, CH₃SO₄ and HSO₄.

10. The sulfur vulcanizable rubber composition of claim 9 wherein said methyl trialkyl ammonium salt is present in an amount of at least 0.05 parts by weight per 100 parts by weight of rubber.

11. The sulfur vulcanizable rubber composition of claim 10 wherein said methyl trialkyl ammonium salt is present in an amount ranging from 0.05 to 5.0 parts by weight per 100 parts by weight of rubber.

12. The sulfur vulcanizable rubber composition of claim 9 wherein M is Cl or CH₃SO₄.

13. The sulfur curable rubber composition of claim 9 wherein said elastomer is selected from the group consisting of natural rubber, neoprene, polyisoprene, butyl rubber, polybutadiene, styrene-butadiene copolymer, methyl methacrylate- butadiene copolymer, isoprene-styrene copolymer, methyl methacrylate-isoprene copolymer, acrylonitrile-isoprene copolymer, acrylonitrile-butadiene copolymer, EPDM or mixtures thereof.

14. The sulfur curable rubber composition of claim 9 wherein the sulfur vulcanizing agent is selected from the group consisting of elemental sulfur, amine disulfide, polymeric polysulfide or sulfur olefin adducts.

15. The sulfur vulcanizable composition of claim 9 wherein the accelerator is selected from the group consisting of amines, disulfides, guanidines, thioureas, thiazoles, thiurams, sulfenamides, dithiocarbamates, xanthates or mixtures thereof.

## Patentansprüche

1. Verfahren zur Erhöhung der Vulkanisationsgeschwindigkeit einer Kautschukzusammensetzung, umfassend das Zugeben eines Methyltrialkylammoniumsalzes der Formel: 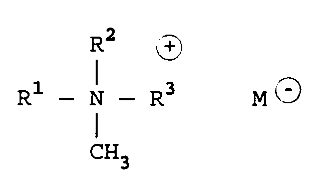 worin R¹, R² und R³ unabhängig Alkylreste mit 8 bis 10 Kohlenstoffatomen sind und M aus der Gruppe, die aus Cl, Br, CH₃SO₄ und HSO₄ besteht, ausgewählt ist, zu einem mit Schwefel vulkanisierbaren Kautschuk.

2. Verfahren nach Anspruch 1, worin mindestens 0,05 Gewichtsteile pro 100 Gewichtsteile Kautschuk des Methyltrialkylammoniumsalzes zugegeben werden.

3. Verfahren nach Anspruch 2, worin das Methyltrialkylammoniumsalz in einer Menge, die von 0,05 bis 5,0 Gewichtsteilen pro 100 Gewichtsteile Kautschuk reicht, zugegeben wird.

4. Verfahren nach Anspruch 1, worin M Cl oder CH₃SO₄ ist.

5. Verfahren nach Anspruch 4, worin M Cl ist.

6. Verfahren nach Anspruch 4, worin M CH₃SO₄ ist.

7. Verfahren nach Anspruch 2, worin der schwefelvulkanisierbare Kautschuk ein olefinische Ungesättigtheit enhaltendes Elastomer enthält und aus der Gruppe, die aus Naturkautschuk, Neopren, Polyisopren, Butylkautschuk, Polybutadien, Styrol-Butadien-Copolymer, Methylmethacrylat-Butadien-Copolymer, Isopren-Styrol-Copolymer, Methylmethacrylat-Isopren-Copolymer, Acrylnitril-Isopren-Copolymer, Acrylnitril-Butadien-Copolymer, EPDM oder Mischungen davon besteht, ausgewählt ist.

8. Verfahren nach Anspruch 7, worin der schwefelvulkanisierbare Kautschuk aus der Gruppe, die aus Naturkautschuk, SBR, Polyisopren oder Mischungen davon besteht, ausgewählt ist.

9. Schwefelvulkanisierbare Kautschukzusammensetzung, umfassend ein olefinische Ungesättigtheit enhaltendes Elastomer, ein Vulkanisationsmittel, einen Beschleuniger und ein Methyltrialkylammoniumsalz der Formel: 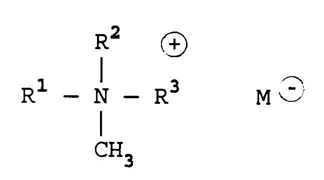 worin R¹, R² und R³ unabhängig Alkylreste mit 8 bis 10 Kohlenstoffatomen sind und M aus der Gruppe, die aus Cl, Br, CH₃SO₄ und HSO₄ besteht, ausgewählt ist.

10. Schwefelvulkanisierbare Kautschukzusammensetzung nach Anspruch 9, worin das Methyltrialkylammoniumsalz in einer Menge von mindestens 0,05 Gewichtsteilen pro 100 Gewichtsteile Kautschuk vorhanden ist.

11. Schwefelvulkanisierbare Kautschukzusammensetzung nach Anspruch 10, worin das Methyltrialkylammoniumsalz in einer Menge, die von 0,05 bis 5,0 Gewichtsteilen pro 100 Gewichtsteile Kautschuk reicht, vorhanden ist.

12. Schwefelvulkanisierbare Kautschukzusammensetzung nach Anspruch 9, worin M Cl oder CH₃SO₄ ist.

13. Schwefelvulkanisierbare Kautschukzusammensetzung nach Anspruch 9, worin das Elastomer aus der Gruppe, die aus Naturkautschuk, Neopren, Polyisopren, Butylkautschuk, Polybutadien, Styrol-Butadien-Copolymer, Methylmethacrylat-Butadien-Copolymer, Isopren-Styrol-Copolymer, Methylmethacrylat-Isopren-Copolymer, Acrylnitril-Isopren-Copolymer, Acrylnitril-Butadien-Copolymer, EPDM oder Mischungen davon besteht, ausgewählt ist.

14. Schwefelvulkanisierbare Kautschukzusammensetzung nach Anspruch 9, worin das Schwefel-Vulkanisationsmittel aus der Gruppe, die aus elementarem Schwefel, Amindisulfid, polymerem Polysulfid oder Schwefel-Olefin-Addukten besteht, ausgewählt ist.

15. Schwefelvulkanisierbare Zusammensetzung nach Anspruch 9, worin der Beschleuniger aus der Gruppe, die aus Aminen, Disulfiden, Guanidinen, Thioharnstoffen, Thiazolen, Thiuramen, Sulfenamiden, Dithiocarbamaten, Xanthaten oder Mischungen davon besteht, ausgewählt ist.

## Revendications

1. Procédé pour augmenter la vitesse de vulcanisation d'une composition de caoutchouc, comprenant l'addition à un caoutchouc vulcanisable au soufre d'un sel de méthyltrialkylammonium de formule : 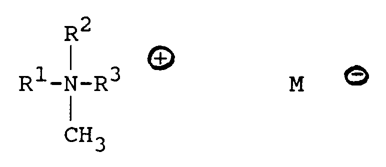 dans laquelle R¹, R² et R³ représentent, indépendamment l'un de l'autre, des radicaux alkyle contenant de 8 à 10 atomes de carbone, et M est choisi parmi le groupe constitué par Cl, Br, CH₃SO₄ et HSO₄.

2. Procédé selon la revendication 1, dans lequel on ajoute au moins 0,05 partie en poids par 100 parties en poids de caoutchouc dudit sel de méthyltrialkylammonium.

3. Procédé selon la revendication 2, dans lequel on ajoute le sel de méthyltrialkylammonium en une quantité se situant de 0,05 à 5,0 parties en poids par 100 parties en poids de caoutchouc.

4. Procédé selon la revendication 1, dans lequel M représente Cl ou CH₃SO₄.

5. Procédé selon la revendication 4, dans lequel M représente Cl.

6. Procédé selon la revendication 4, dans lequel M représente CH₃SO₄.

7. Procédé selon la revendication 2, dans lequel ledit caoutchouc vulcanisable au soufre contient un élastomère contenant une insaturation oléfinique et est choisi parmi le groupe constitué par le caoutchouc naturel, le néoprène, le polyisoprène, le caoutchouc butyle, le polybutadiène, un copolymère de styrène-butadiène, un copolymère de méthacrylate de méthyle-butadiène, un copolymère d'isoprène-styrène, un copolymère de méthacrylate de méthyle-isoprène, un copolymère d'acrylonitrile-isoprène, un copolymère d'acrylonitrile-butadiène, le EPDM ou des mélanges de ces derniers.

8. Procédé selon la revendication 7, dans lequel ledit caoutchouc vulcanisable au soufre est choisi parmi le groupe constitué par le caoutchouc naturel, le SBR, le polyisoprène ou des mélanges de ces derniers.

9. Composition de caoutchouc vulcanisable au soufre, comprenant un élastomère contenant une insaturation oléfinique, un agent de vulcanisation, un accélérateur et un sel de méthyltrialkylammonium de formule : 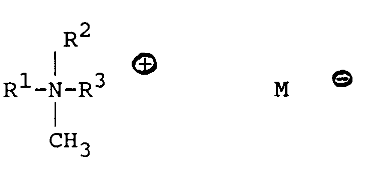 dans laquelle R¹, R² et R³ représentent, indépendamment l'un de l'autre, des radicaux alkyle contenant de 8 à 10 atomes de carbone, et M est choisi parmi le groupe constitué par Cl, Br, CH₃SO₄ et HSO₄.

10. Composition de caoutchouc vulcanisable au soufre selon la revendication 9, dans laquelle ledit sel de méthyltrialkylammonium est présent en une quantité d'au moins 0,05 partie en poids par 100 parties en poids de caoutchouc.

11. Composition de caoutchouc vulcanisable au soufre selon la revendication 9, dans laquelle ledit sel de méthyltrialkylammonium est présent en une quantité se situant de 0,05 à 5,0 parties en poids de caoutchouc.

12. Composition de caoutchouc vulcanisable au soufre selon la revendication 9, dans laquelle M représente Cl ou CH₃SO₄.

13. Composition de caoutchouc vulcanisable au soufre selon la revendication 9, dans laquelle ledit élastomère est choisi parmi le groupe constitué par le caoutchouc naturel, le néoprène, le polyisoprène, le caoutchouc butyle, le polybutadiène, un copolymère de styrène-butadiène, un copolymère de méthacrylate de méthyle-butadiène, un copolymère d'isoprène-styrène, un copolymère de méthacrylate de méthyle-isoprène, un copolymère d'acrylonitrile-isoprène, un copolymère d'acrylonitrile-butadiène, le EPDM ou des mélanges de ces derniers.

14. Composition de caoutchouc vulcanisable au soufre selon la revendication 9, dans laquelle l'agent de vulcanisation au soufre est choisi parmi le groupe constitué par le soufre élémentaire, un disulfure d'amine, un polysulfure polymère ou des adduits de soufre-oléfine.

15. Composition vulcanisable au soufre selon la revendication 9, dans laquelle l'accélérateur est choisi parmi le groupe constitué par des amines, des disulfures, des guanidines, des thio-urées, des thiazoles, des thiurames, des sulfénamides, des dithiocarbamates, des xanthates ou des mélanges de ces derniers.
